# EUROPÄISCHE PATENTSCHRIFT

(11) **EP 2 481 506 B1**
(45) Veröffentlichungstag und Bekanntmachung des Hinweises auf die Patenterteilung: **31.07.2013**
(21) Anmeldenummer: 12000410.6
(22) Anmeldetag: 23.01.2012
(51) Int. Cl.: B23C 1/00, B23C 9/00, B23Q 37/00, B23Q 39/02, B23C 1/12

(54) **Doppel-Fräswerk mit zentraler Arbeitsbrücke**
Double milling machine with central working bridge
Fraiseuse double dotée d'un pont de travail central

(30) Priorität: 29.01.2011 DE 102011009793
(43) Veröffentlichungstag der Anmeldung: 01.08.2012
(73) Patentinhaber: SHW Werkzeugmaschinen GmbH, 73433 Aalen (DE)
(72) Erfinder: Maier, Franz, 73431 Aalen (DE)
(74) Vertreter: Zirkel, Herbert

(56) Entgegenhaltungen:
- EP-A1- 2 017 035
- EP-A1- 2 246 136
- DE-U1- 20 208 792
- FR-A- 922 572

## Beschreibung

Die Erfindung betrifft ein Doppel-Fräswerk gemäss dem Oberbegriff des Patentanspruchs 1. Ein derartiges Gerät ist aus der DE 20208792U bekannt.

### Aufgabe der Erfindung

Zu einem solchen Fräswerk werden zwei von einander unabhängig gesteuerte und arbeitende Fräsmaschinen mit verfahrbarem Ständer so parallel zueinander angeordnet, dass das zwischen ihnen befindliche Werkstück aus beiden Richtungen bearbeitet werden kann. Sind diese Fräsmaschinen mit winkelbeweglichen Fräsköpfen ausgestattet, ist bei der beschriebenen Aufstellung eine Bearbeitung des Werkstücks durch Fräsen oder Bohren rundum weitgehend möglich. Schwierigkeiten bereitet die Bearbeitung der Oberfläche, sofern die zu bearbeitende Stelle inner- und unterhalb der Außenkante des Werkstücks liegt. In beschränktem Maße kann dann die Ausstattung der Fräsköpfe mit ausfahrbaren Pinolen noch hilfreich sein. Wünschenswert ist aber ein vertikaler Bearbeitungszugang, ohne den das Werkstück neuerlich gelagert werden müßte, damit die zu bearbeitenden Orte horizontal erreicht werden können.

Vertikale Bearbeitungszugänge, u. U. auch kombiniert mit horizontal arbeitenden Einheiten, bieten Portal-Fräsmaschinen oder -Bohrwerke. Die Einsatzmöglichkeiten solcher Maschinen haben jedoch bauartgemäße Einschränkungen, selbst bei Ausführung im Gantry-Bauweise. So ist der Abstand der Portaltürme nicht frei wählbar, und auch für die Portalhöhen bestehen Beschränkungen vor allem aufgrund des sehr hohen konstruktiven und finanziellen Aufwands, der mit über ein wirtschaftlich sinnvolles Maß hinausgehenden Erweiterungen in diesem Bereich einhergeht. Schließlich fehlt solchen Maschinen die Möglichkeit, gleichzeitig völlig unterschiedliche Arbeiten aus zwei Richtungen an nicht parallelen Orten auszuführen.

### Beschreibung der Erfindung

Die Ausführung gemäß der vorliegenden Erfindung soll die vorstehend geschilderten Nachteile beseitigen und ein zur Rundum-Bearbeitung eines Werkstücks fähiges Fräswerk bei sehr geringem Zusatzaufwand schaffen. Sie ist zudem in zahlreichen weiteren Punkten vorteilhaft.

Erfindungsgemäß wird die Aufgabe dadurch gelöst, daß an die Stelle der Fräsköpfe der Arbeitsspindeln der beiden Fräsmaschinen eine die Spindelstöcke verbindende Arbeitsbrücke eingewechselt wird, die mindestens eine in Richtung des zu bearbeitenden Werkstücks, also vertikal, angeordnete weitere Arbeitsspindel mit Bearbeitungswerkzeug aufweist. Da die beiden Fräsmaschinen elektronisch gesteuert in allen Bewegungsrichtungen synchron gefahren werden können, ist das gemeinsame Aufgreifen der Arbeitsbrücke an einer Ablagestelle im Arbeitsbereich der Maschinen nicht problematisch, sofern die Maschinen auch über Kopfwechsel-Einrichtungen mit Schnittstellen an den Spindelstöcken verfügen.

Die Bewegungsmöglichkeiten der beiden Fräsmaschinenständer bleiben voll erhalten, müssen jedoch, solange die Arbeitsbrücke eingewechselt ist, synchronisiert sein. So lässt sich die Arbeitsbrücke durch entsprechendes gegenläufiges Ein- bzw. Ausfahren der Spindelstöcke in horizontaler Querrichtung (Z) über dem Werkstück hin- und herbewegen. Durch die vertikalen Bewegungen der Spindelstöcke (Y) wird auch die entsprechende Bewegung der Arbeitsspindel am der Arbeitsbrücke erzeugt und entsprechend durch die horizontalen Bewegungen der Fräsmaschinenständer in Längsrichtung (X) deren horizontaler Verfahrweg.

Es ergibt sich damit auf einfachste Weise ein Fräswerk in Gantry-Bauweise, bei dem ohne wesentlichem zeitlichem Aufwand von der vertikalen zur horizontalen Bearbeitungsrichtung und zurück gewechselt werden kann.

Sind die Schnittstellen an den Spindelstöcken der Fräsmaschinen drehbar und können sie in beliebige Winkelpositionen gesteuert und in diesen gehalten werden, ergibt sich als besonderer Vorteil die Möglichkeit, die Arbeitsspindel an der Arbeitsbrücke auch für horizontale Bearbeitungsvorgänge einzusetzen, dazu, sofern sich das Werkstück auf einem Rundtisch befindet, an allen Werkstückseiten. Damit kann in geeigneten Fällen darauf verzichtet werden, für die Horizontalbearbeitung die Arbeitsbrücke wieder aus- und einen Fräskopf einzuwechseln. Dies bedingt allerdings die entsprechende Ausstattung beider Spindelstöcke und die synchrone Ansteuerung beider Schnittstellen, damit keine Torsion in der Arbeitsbrücke verursacht wird.

Die Arbeitsspindel an der Arbeitsbrücke kann mit einem eigenen Antrieb über Elektromotor und Getriebekasten o.ä. ausgestaltet sein. Da die Arbeitsbrücke aber an den Schnittstellen der Spindelstöcke zu den Fräsköpfen anliegt, kann der Antrieb auch durch einen der Frässpindel-Antriebe über eine in der Arbeitsbrücke liegende Kupplungs- oder VerbindungsWelle mit Umlenkgetriebe erfolgen. Wird die Arbeitsbrücke an die Schnittstellen zu den Spindelstöcken vollständig angeschlossen, hat dies die weitere vorteilhafte Folge, dass auch die übrigen Verbindungen, die an diesen Schnittstellen anstehen, für die Arbeitsbrücke und deren Arbeitsspindel genutzt werden können, insbesondere die elektrischen, pneumatischen und hydraulischen. Wegen des geringen zur Verfügung stehenden Raumes sind die Versorgungsmöglichkeiten an dieser Stelle einer Fräsmaschine stets eingeschränkt. Die Spindel an der Arbeitsbrücke mit dem zugehörigen Fräskopf kann bei der erfindungsgemäßen Ausführung vorteilhafterweise aus beiden Fräsmaschinen, also doppelt, bedient werden.

Der Fahrweg des Bearbeitungswerkzeugs in der horizontalen Quer-Achse (Z) wird bei Einsatz der Arbeitsbrücke um den Abstand zwischen der darauf angeordneten vertikalen Arbeitsspindel und dem Ende der Arbeitsbrücke in Richtung auf das Werkstück hin bzw. darüber hinaus verlagert, variierend je nach Länge der Arbeitsbrücke. Allerdings gilt diese Verlagerungsmöglichkeit nur so weit, wie für den gegenüberliegenden Spindelkasten noch Bewegungsraum verbleibt.

Da die Arbeitsbrücke mit den beiden Spindelstöcken starr verbunden ist, entfällt weitgehend die sonst beim Ausfahren von Spindelkästen aus Schwerkraftgründen eintretende Drehung der Werkzeugachse aufgrund der elastischen Verformungen der Führungselemente der Y- und Z-Achse, was die Genauigkeit der Bearbeitung günstig beeinflußt.

Die Anordnung mehrerer angetriebener Arbeitsspindeln oder anderer Zusatzgeräte, wie z.B. Messeinrichtungen, auch in von der Vertikalen abweichenden Arbeitsrichtungen, auf der Arbeitsbrücke ist ohne Schwierigkeiten möglich.

Wird anstelle eines drehenden Werkzeugs ein feststehendes in der Arbeitsspindel eingesetzt und befindet sich das Werkstück auf einem verschiebbaren oder drehbaren Tisch, so ist bei der erfindungsgemäßen Gestaltung neben Fräs- oder Bohrbearbeitung auch die spanende Bearbeitung durch Drehen oder Hobeln möglich.

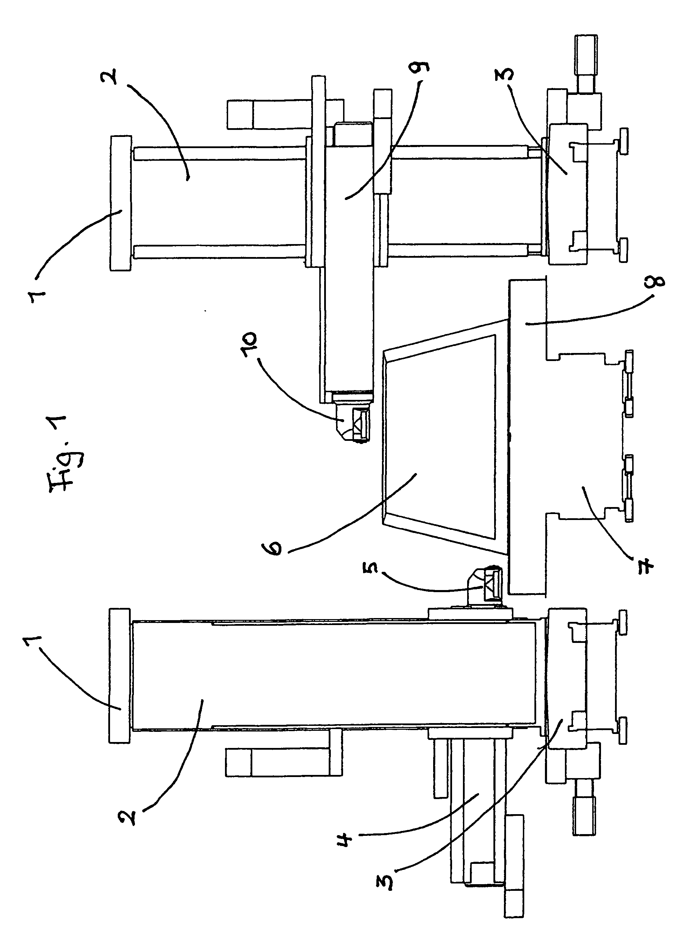

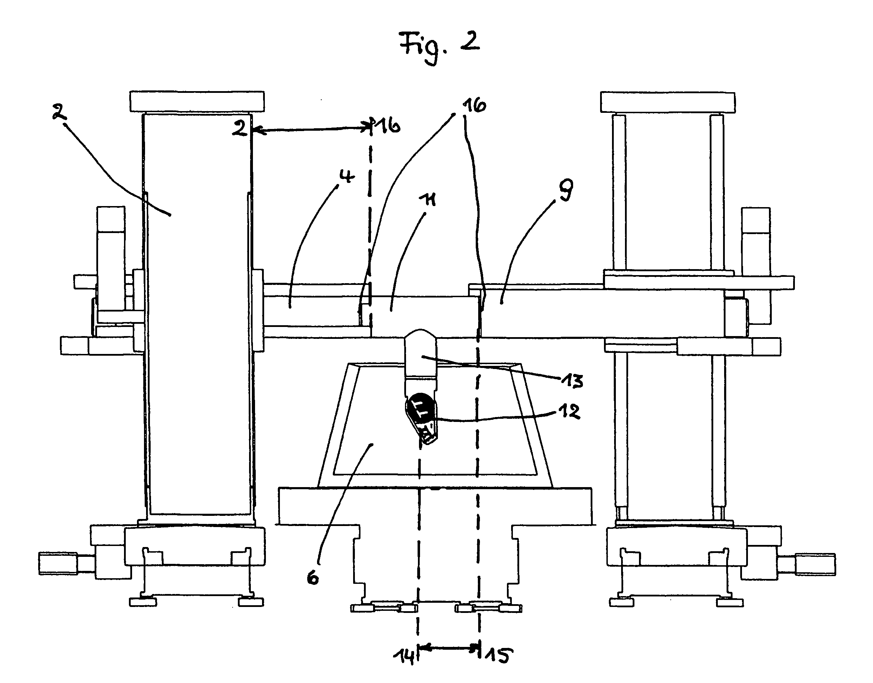

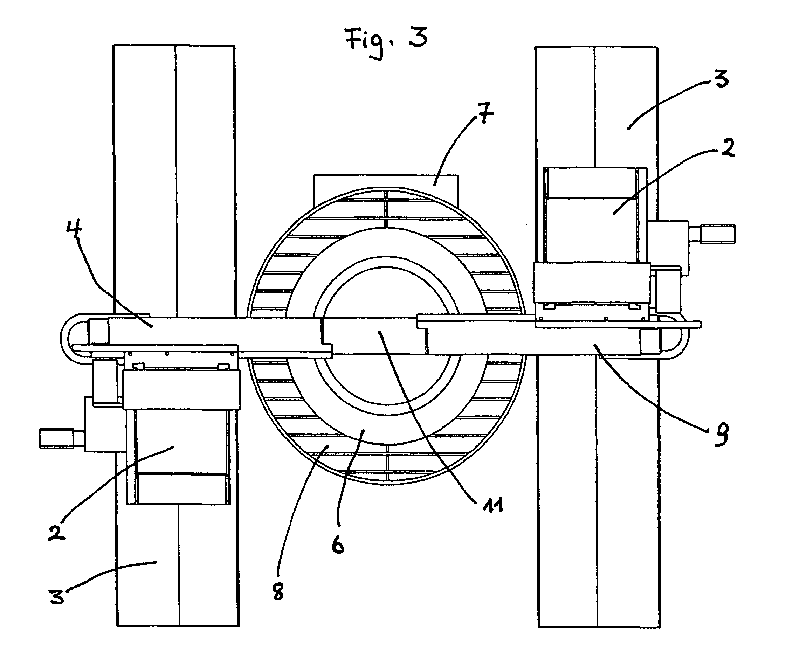

Im Folgenden werden anhand der Abbildungen Fig.1 bis Fig.3 die Einzelheiten der Erfindung erläutert. Fig. 1 zeigt dabei einen Blick in der Horizontalen in Fahrrichtung der Maschinenständer auf das Fräswerk bei Ausstattung der beiden horizontalen Spindelstöcke mit Fräsköpfen. Fig. 2 den gleichen Blick nach dem Einwechseln der Arbeitsbrücke. Fig. 3 ist die Draufsicht auf das Fräswerk in dem Zustand gemäß Fig. 2.

In **Fig.1** stehen sich die beiden Fräsmaschinen 1 auf beiden Seiten des Werkstücks 6 gegenüber. Die Maschinenständer 2 sind auf den Maschinenbetten 3 in Blickrichtung verfahrbar. Die an den Maschinenständem 2 auf- und abgleitenden Spindelstöcke 4,9, die horizontal in Richtung auf das Werkstück 6 verschoben werden können, tragen an ihrem vorderen Ende die Fräsköpfe 5,10. Das Werkstück 6 ist auf dem Aufspanntisch 7 und einem darauf liegenden Rundtisch 8 drehbar gelagert. In teilweise ausgefahrenem Zustand ist der Spindelstock 9 dargestellt. Sein Fräskopf 10 zeigt auf, worin das Hindernis liegt, mit dem Fräskopf 10 in dem Inneren des Werkstücks 6 zu arbeiten. Selbst wenn ein Fräskopf 10 verwendet wird, der in eine vertikale Richtung gedreht werden kann, ist die Bearbeitungsmöglichkeit auf einen sehr geringen Raum unterhalb der Oberkante des Werkstücks 6 beschränkt.

In **Fig. 2** tragen die Spindelstöcke 4,9 keine Fräsköpfe 5. An ihre Stelle ist die Arbeitsbrücke 11 getreten, die die Spindelstöcke 4,9 an den Schnittstellen 16 fest verbindet. Die Arbeitsbrücke 11 ist in Richtung auf das Werkstück 6 mit einer vertikalen, eine Antriebsspindel enthaltenden Verlängerung 13 versehen, an deren freiem Ende sich ein zusätzlicher Fräskopf 12 befindet. Der hier dargestellte Fräskopf 12 ist nur beispielhaft gewählt. Es können sämtliche zur Verfügung stehenden Fräsköpfe unterschiedlicher Bauart verwendet werden. Es ist ersichtlich, dass die Tiefe, mit der der Fräskopf 12 in das Werkstück 6 eintauchen kann, davon abhängt, wie lange die Verlängerung 13 ist. Ihre Länge muss je nach anstehender Arbeitsaufgabe gewählt werden. Der Abstand 14,15 zwischen dem Fräskopf 12 und dem Ende der Arbeitsbrücke 11, das dem Spindelstock 9 zugewandt ist, bestimmt das Maß der Verlagerung des Arbeitsbereichs für den Fräskopf 12 in Richtung auf den gegenüberliegenden Maschinenständer 2, jedoch nicht über den Abstand zwischen dem jenseitigen Ende 16 der Arbeitsbrücke 11 und dem Maschinenständer 2 hinaus.

**Fig. 3** zeigt die Situation von Fig. 2 in der Draufsicht.

Auf die Darstellung von Einzelheiten der technischen Ausführung wurde verzichtet. Sie sind für den prinzipiellen Grundgedanken der Erfindung ohne Bedeutung.

### Liste der Bezugszeichen

- 1: Fräsmaschine
- 2: Maschinenständer
- 3: Maschinenbett
- 4: Spindelstock
- 5: Fräskopf
- 6: Werkstück
- 7: Aufspanntisch
- 8: Rundtisch
- 9: Spindelstock
- 10: Fräskopf
- 11: Arbeitsbrücke
- 12: Zusätzlicher Fräskopf
- 13: Vertikale Verlängerung mit Arbeitsspindel
- 14: Position des zusätzlichen Fräskopfs
- 15: Vorderes Ende der Arbeitsbrücke
- 16: Schnittstelle am Spindelstock

## Patentansprüche

1. Doppel-Fräswerk für die Bearbeitung von Werkstücken, bestehend aus zwei selbständig arbeitenden und gesteuerten Fräsmaschinen (1), die beidseitig eines auf einer Spannfläche oder auf einem Aufspanntisch (7) gelagerten Werkstücks (6) einander gegenüber angeordnet sind, mit je mindestens einem auf einem Maschinenbett (3) fahrbaren Maschinenständer (2) und mit je mindestens einem am Maschinenständer auf- und abgleitenden und in Richtung zum Werkstück (6) ausfahrbaren Spindelstock (4), an dessen zum Werkstück gerichteten, drehbaren und in beliebigen Winkelpositionen arretierbaren Schnittstelle (16) ein Fräskopf (5) angebracht ist, der die Bearbeitungswerkzeuge trägt,
**dadurch gekennzeichnet, daß**
an die Stelle der Fräsköpfe (5) eine Arbeitsbrücke (11) tritt, die mit den Schnittstellen (16) der Spindelstöcke (4) beidseitig fest, aber lösbar verbunden ist und in Richtung auf das zu bearbeitende Werkstück mindestens eine zusätzliche Arbeitsspindel (13) mit Bearbeitungswerkzeug oder Fäskopf (12) aufweist.

2. Doppel-Fräswerk gemäß Anspruch 1,
**dadurch gekennzeichnet, daß**
die Verbindung mit der Schnittstelle (16) die Anschlüsse an die dort anstehenden Versorgungsleitungen für Strom, Gase und Flüssigkeiten mindestens teilweise umfaßt.

3. Doppel-Fräswerk gemäß Ansprüchen 1 und 2,
**dadurch gekennzeichnet, daß**
die auf der Arbeitsbrücke (11) angeordneten Arbeitsspindeln oder Einrichtungen mit Strom, Gasen und Flüssigkeiten über beide Schnittstellen 16 der Spindelstöcke 4 versorgt werden.

4. Doppel-Fräswerk gemäß Anspruch 1,
**dadurch gekennzeichnet, daß**
durch entsprechende Steuerung und Fixierung der Schnittstellen (16) die Arbeitsbrücke (11) mit Arbeitsspindel sowohl für vertikale als auch für horizontale bzw. dazwischenliegende Arbeitsstellungen positioniert werden kann.

5. Doppel-Fräswerk gemäß Anspruch 1,
**dadurch gekennzeichnet, daß**
die Arbeitsspindel (13) durch eine an der Arbeitsbrücke (11) angebrachte Antriebseinrichtung unabhängig angetrieben wird.

6. Doppel-Fräswerk gemäß Anspruch 1,
**dadurch gekennzeichnet, daß**
die Arbeitsspindel (13) über eine der Schnittstellen (16) mit der Arbeitsspindel des zugehörigen Spindelstocks (4) verbunden ist und von ihr angetrieben wird.

7. Doppel-Fräswerk gemäß Anspruch 1,
**dadurch gekennzeichnet, daß**
die Arbeitsbrücke (11) zusätzliche Arbeitsspindeln oder sonstige Bearbeitungs- oder Mess-Einrichtungen aufweist.

8. Doppel-Fräswerk gemäß Anspruch 1,
**dadurch gekennzeichnet, daß**
an der Arbeitsbrücke (11) oder einer der dort angeordneten Arbeitsspindeln oder Einrichtungen sich ein feststehendes Werkzeug für die spanende Bearbeitung des Werkstück (6) durch Drehen oder Hobeln befindet.

## Claims

1. A double milling machine for the processing of work pieces consisting of two independently working and controlled milling machines (1), which are arranged opposite to each other on both sides of a work piece (6) that is positioned on a clamping surface or on a clamping table (7), with at least one movable machine stand (2) in each case on a machine bed (3) and with at least one extendible spindle head (4) on the machine stand in each case, which glides up and down and in the direction of the work piece (6) and to whose rotatable interface (16), which can be locked in any desired angular position and which is pointed towards the work piece, a milling head (5) is attached and holds the processing tools,
**characterised in that**
at the location of the milling heads (5) a working bridge (11) is formed, which is tightly but detachably connected on both sides to the interfaces (16) of the spindle heads (4) and has at least one additional working spindle (13) with a processing tool or a milling head (12) in the direction of the work piece to be processed.

2. Double milling machine under claim 1,
**characterised in that**
the link with the interface (16) comprises at least some of the connections to the supply lines for power, gas and fluids that are present there.

3. Double milling machine under claims 1 and 2,
**characterised in that**
the working spindles or devices arranged on the working bridge (11) are supplied with power, gas and fluids via both interfaces (16) of the spindle heads (4).

4. Double milling machine under claim 1,
**characterised in that**
the working bridge (11) can be put in place with the working spindle for vertical and horizontal and/or intermediate operating positions by means of appropriate controlling and setting of the interfaces (16).

5. Double milling machine under claim 1,
**characterised in that**
the working spindle (13) is driven independently by a drive device that is attached to the working bridge (11).

6. Double milling machine under claim 1,
**characterised in that**
the working spindle (13) is connected by means of one of the interfaces (16) to the working spindle of the associated spindle head (4) and is driven by it.

7. Double milling machine under claim 1,
**characterised in that**
the working bridge (11) has additional working spindles or other processing or measurement devices.

8. Double milling machine under claim 1,
**characterised in that**
a stationary tool is located on the working bridge (11) or on one of the working spindles or devices arranged there for the machining of the work piece (6) by means of turning or planing.

## Revendications

1. Double fraiseuse pour l'usinage de pièces à travailler, composée de deux machines de fraisage à commande et fonctionnement indépendants (1), les pièces à travailler (6) sont disposées l'une par rapport à l'autre, des deux côtés d'une surface de serrage ou bien d'une table de fixation (7), avec pour chacune des pièces au moins un dispositif de retenue (2) mobile sur un banc de machine (3) et avec pour chaque au moins un porte-broche (4) pouvant être déplacé vers le haut et le bas sur le dispositif de retenue et mobile en direction de la pièce (6), lequel porte-broche comporte une interface de connexion (16), rotative, dirigée vers la pièce, et indexable dans toutes les positions angulaires possibles, sur laquelle une tête de fraisage (5) est montée, qui porte les outils d'usinage,
**caractérisée par le fait que**
à la place des têtes de fraisage (5) un portique (11) entre en action, lequel est connecté des deux côtés, de manière fixe mais amovible avec les interfaces de connexion (16) des portes-broches (4) et qui, en direction de la pièce à travailler, dispose d'au moins une broche supplémentaire (13) avec un outil d'usinage ou une tête de fraisage (12).

2. Double fraiseuse conformément à la revendication 1,
**caractérisée par le fait que**
le raccordement avec l'interface de connexion (16) comprend, au moins de manière partielle, les raccords aux lignes d'alimentation existantes pour l'électricité, les gaz et les fluides.

3. Double fraiseuse conformément aux revendications 1 et 2,
**caractérisée par le fait que**
les broches ou les dispositifs répartis sur le portique (11) sont alimentés en électricité, gaz ou fluides via les deux interfaces de connexion (16) des portes-broches (4).

4. Double fraiseuse conformément à la revendication 1,
**caractérisée par le fait que**
par le biais d'une commande et d'une fixation appropriées des interfaces de connexion (16), le portique (11) comportant la broche peut être positionné aussi bien pour des positions de travail verticales et horizontales ou intermédiaires.

5. Double fraiseuse conformément à la revendication 1,
**caractérisée par le fait que**
la broche (13) fonctionne de manière indépendante via un dispositif d'entraînement monté sur le portique (11)

6. Double-fraiseuse conformément à la revendication 1,
**caractérisée par le fait que**
la broche (13) est connectée, via l'une des interfaces (16), à la broche du porte-broche (4) correspondant et est entraînée par elle.

7. Double-fraiseuse conformément à la revendication 1,
**caractérisée par le fait que**
le portique (11) possède des broches supplémentaires ou bien d'autres dispositifs d'usinage ou de mesure.

8. Double-fraiseuse conformément à la revendication 1,
**caractérisée par le fait que**
sur le portique (11) ou bien sur l'une des broches ou l'un des dispositifs qui y sont disposés, il y a un outil fixe pour l'usinage sous bridage de la pièce (6) par rotation ou par rabotage.
